# EUROPÄISCHE PATENTANMELDUNG

(11) **EP 1 394 565 A1**
(43) Veröffentlichungstag der Anmeldung: **03.03.2004**
(21) Anmeldenummer: 03018421.2
(22) Anmeldetag: 13.08.2003
(51) Int. Cl.: G01S 15/04, G08B 13/16

(54) **Verfahren und System zur Innenraumüberwachung**

(30) Priorität: 26.08.2002 DE 10239087
(71) Anmelder: Delphi Technologies, Inc., Troy, MI 48007 (US)
(72) Erfinder: Uttich, Bernd, 51643 Gummersbach (DE); Krawietz, Manfred, 51580 Reichshof (DE)
(74) Vertreter: Manitz, Finsterwald & Partner GbR

(57) **Zusammenfassung**

Bei einem Verfahren zur Bereichsüberwachung, insbesondere für Kraftfahrzeuge, wird mittels wenigstens eines Ultraschallsenders ein Ultraschallsignal in den zu überwachenden Bereich gesendet, mittels wenigstens eines Ultraschallempfängers ein reflektiertes Ultraschallsignal empfangen und das empfangene Ultraschallsignal mittels einer elektronischen Auswerteeinrichtung ausgewertet. Dabei wird die Amplitude des der Weiterverarbeitung zugeführten Ultraschall-Empfangssignals auf einen vorgebbaren Wert beschränkt, indem die vom Ultraschallsender abgestrahlte Schallleistung entsprechend eingestellt wird. Es wird auch ein entsprechendes Ultraschall-Bereichsüberwachungs-System angegeben.

## Beschreibung

Die Erfindung betrifft ein Verfahren zur Bereichsüberwachung, insbesondere für Kraftfahrzeuge, bei dem mittels wenigstens eines Ultraschallsenders ein Ultraschallsignal in den zu überwachenden Bereich gesendet wird, mittels wenigstens- eines Ultraschallempfängers ein reflektiertes Ultraschallsignal empfangen und das empfangene Ultraschallsignal mittels einer elektronischen Auswerteeinrichtung ausgewertet wird. Sie betrifft ferner ein Ultraschall-Bereichsüberwachungs-System gemäß dem Oberbegriff des Anspruchs 9.

Eine entsprechende Bereichsüberwachung kann insbesondere Bestandteil eines Kraftfahrzeug-Alarmsystems sein. Dabei kann es z.B. darum gehen, ein unerlaubtes Eindringen in den zu überwachten Innenraum zu erkennen. Außer beispielsweise einer Innenraumüberwachung kann z.B. auch eine Abstandserkennung oder -messung, mit der z.B. der Abstand zu einem vorangehenden Fahrzeug oder zu anderen Objekten überwacht wird, eine Einparkhilfe, eine Sitzplatzbelegungserkennung usw. in Frage kommen. Neben einer möglichst hohen Erkennungsrate von beispielsweise eindringenden Objekten besteht ein weiteres wichtiges Kriterium in einer möglichst niedrigen Fehlalarmrate.

Die Amplitude des empfangenen Ultraschallsignals hängt nun aber insbesondere von der Geometrie und der Reflektivität des zu überwachenden Bereichs, z.B. Kraftfahrzeug-Innenraums usw., und von den akustischen Eigenschaften der Sensorelemente, d.h. der Schallsender und -empfänger ab, wobei sich insbesondere auch Toleranzen der Schallsender- und -empfängerkapseln entsprechend auswirken können.

Um eine Fehlfunktion des betreffenden Ultraschallmoduls zu vermeiden, muss die Amplitude des empfangenen Ultraschallsignals, die von dem Analog/Digital-Wandler des betreffenden Mikrocontrollers ausgewertet wird, möglichst störungs- oder verzerrungsfrei beschränkt werden. Es muss also eine gewisse Balance zwischen der Geometrie und der Reflektivität des zu überwachten Bereichs, beispielsweise Kraftfahrzeug-Innenraums, und den genannten akustischen Eigenschaften hergestellt werden. Dazu wurde bisher die Verstärkung in der Empfangsschaltung durch den Mikrocontroller entsprechend angepasst. Dieses bisher übliche Vorgehen erfordert nun aber verschiedene Komponenten, was die Kosten des Überwachungssystems insgesamt in die Höhe treibt und insbesondere auch hinsichtlich der elektromagnetischen Verträglichkeit Probleme mit sich bringen kann.

Der Erfindung liegt die Aufgabe zugrunde, ein verbessertes Verfahren sowie ein verbessertes System der eingangs genannten Art zu schaffen, bei denen die zuvor erwähnten Probleme beseitigt sind.

Bezüglich des Verfahrens wird diese Aufgabe erfindungsgemäß dadurch gelöst, dass die Amplitude des der Weiterverarbeitung zugeführten Ultraschall-Empfangssignals auf einen vorgebbaren Wert beschränkt wird, indem die vom Ultraschallsender abgestrahlte Schallleistung entsprechend eingestellt wird.

Erfindungsgemäß wird anstelle der Verstärkung in der Empfangsschaltung also die abgestrahlte Schallleistung entsprechend variiert. Demzufolge können die für die bisher erforderliche Verstärkungseinstellung auf der Empfangsseite erforderlichen Komponenten eingespart werden. Es ergibt sich eine einfachere Topologie insbesondere des Rückführungsnetzwerkes im empfangsseitigen Verstärker. Die Anzahl der zum Betreiben der Empfangsschaltung erforderlichen Steuersignale wird entsprechend verringert. Demzufolge werden insbesondere auch die Probleme im Zusammenhang mit der elektromagnetischen Verträglichkeit auf ein Minimum reduziert. Der Platzbedarf beispielsweise auf einer gedruckten Schaltung wird entsprechend verringert. Zudem wird insbesondere auch der Zeitaufwand für das entsprechende Layout entsprechend verringert. Schließlich werden die jeweiligen Endtests entsprechend vereinfacht und abgekürzt.

Mittels des Ultraschallsenders werden bevorzugt Ultraschallpulse erzeugt.

Gemäß einer bevorzugten praktischen Ausgestaltung des erfindungsgemäßen Verfahrens wird die vom Ultraschallsender abgestrahlte Schallleistung durch eine Pulsbreitenmodulation entsprechend eingestellt.

Wie bereits erwähnt, kann das erfindungsgemäße Verfahren beispielsweise für eine Innenraumüberwachung, eine Abstandserkennung oder -messung, eine Einparkhilfe, eine Sitzplatzbelegungserkennung usw. ausgelegt ein.

Gemäß einer zweckmäßigen Ausgestaltung des erfindungsgemäßen Verfahrens sind die Sendefunktion und die Empfangsfunktion in einem Transceiver integriert.

Anstelle der Verwendung eines Schaltkreises zur Ansteuerung des Ultraschallsenders mit einem Rechtecksignal, das ein festes Tastverhältnis von z.B. 50 % aufweist, wird der Ultraschallsender erfindungsgemäß also vorzugsweise über ein pulsbreitenmoduliertes Signal angesteuert. Entsprechend dem Tastverhältnis des pulsmodulierten Steuersignals kann dann insbesondere der Schalldruck der Senderkapsel entsprechend eingestellt werden.

Bezüglich des Ultraschall-Bereichsüberwachungs-Systems wird die eingangs genannte Aufgabe erfindungsgemäß entsprechend dadurch gelöst, dass zur Beschränkung der Amplitude des weiterzuverarbeitenden Ultraschall-Empfangssignals auf einen vorgebbaren Wert die vom Ultraschallsender abgestrahlte Schallleistung entsprechend einstellbar ist. Bevorzugte Ausführungsformen des erfindungsgemäßen Ultraschall-Bereichsüberwachungs-Systems sind in den Unteransprüchen angegeben.

Das erfindungsgemäße Ultraschall-Bereichsüberwachungs-System kann in einem entsprechenden Ultraschall-Modul integriert sein. Die Auswertung des empfangenen Ultraschallsignals kann insbesondere über einen Mikrocontroller oder dergleichen erfolgen. Über einen solchen Mikrocontroller kann insbesondere auch der Ultraschallsender entsprechend angesteuert werden. Die betreffende Auswerteeinrichtung bzw. Mikrocontroller kann beispielsweise Teil des Steuergeräts eines Kraftfahrzeugs sein. Ultraschallsender und Ultraschallempfänger können, wie bereits erwähnt, vorteilhafterweise in einem Transceiver integriert sein.

## Patentansprüche

1. Verfahren zur Bereichsüberwachung, insbesondere für Kraftfahrzeuge, bei dem mittels wenigstens eines Ultraschallsenders ein Ultraschallsignal in den zu überwachenden Bereich gesendet wird, mittels wenigstens eines Ultraschallempfängers ein reflektiertes Ultraschallsignal empfangen und das empfangene Ultraschallsignal mittels einer elektronischen Auswerteeinrichtung ausgewertet wird,
**dadurch gekennzeichnet,**
**dass** die Amplitude des der Weiterverarbeitung zugeführten Ultraschall-Empfangssignals auf einen vorgebbaren Wert beschränkt wird, indem die vom Ultraschallsender abgestrahlte Schallleistung entsprechend eingestellt wird.

2. Verfahren nach Anspruch 1,
**dadurch gekennzeichnet,**
**dass** mittels des Ultraschallsenders Ultraschallpulse erzeugt werden.

3. Verfahren nach Anspruch 1 oder 2,
**dadurch gekennzeichnet,**
**dass** die vom Ultraschallsender abgestrahlte Schallleistung durch eine Pulsbreitenmodulation entsprechend eingestellt wird.

4. Verfahren nach einem der vorhergehenden Ansprüche,
**dadurch gekennzeichnet,**
**dass** es für eine Innenraumüberwachung ausgelegt ist.

5. Verfahren nach einem der vorhergehenden Ansprüche,
**dadurch gekennzeichnet,**
**dass** es für eine Abstandserkennung oder -messung ausgelegt ist.

6. Verfahren nach einem der vorhergehenden Ansprüche,
**dadurch gekennzeichnet,**
**dass** es für eine Einparkhilfe ausgelegt ist.

7. Verfahren nach einem der vorhergehenden Ansprüche,
**dadurch gekennzeichnet,**
**dass** es für eine für eine Sitzplatzbelegungserkennung ausgelegt ist.

8. Verfahren nach einem der vorhergehenden Ansprüche,
**dadurch gekennzeichnet,**
**dass** die Sendefunktion und die Empfangsfunktion in einem Transceiver integriert sind.

9. Ultraschall-Bereichsüberwachungs-System insbesondere für Kraftfahrzeuge, mit wenigstens einem Ultraschallsender zum Aussenden eines Ultraschallsignals in den zu überwachenden Bereich, wenigstens einem Ultraschallempfänger für den Empfang eines reflektierten Ultraschallsignals und einer Auswerteeinrichtung zur Auswertung des empfangenen Ultraschallsignals, insbesondere zur Durchführung des Verfahrens nach einem der vorhergehenden Ansprüche,
**dadurch gekennzeichnet,**
**dass** zur Beschränkung der Amplitude des weiterzuverarbeitenden Ultraschall-Empfangssignals auf einen vorgebbaren Wert die vom Ultraschallsender abgestrahlte Schallleistung entsprechend einstellbar ist.

10. Ultraschall-Bereichsüberwachungs-System nach Anspruch 9,
**dadurch gekennzeichnet,**
**dass** der Ultraschallsender zur Erzeugung von Ultraschallpulsen ansteuerbar ist.

11. Ultraschall-Bereichsüberwachungs-System nach Anspruch 9 oder 10,
**dadurch gekennzeichnet,**
**dass** die vom Ultraschallsender abgestrahlte Schallleistung durch eine Pulsbreitenmodulation entsprechend einstellbar ist.

12. Ultraschall-Bereichsüberwachungs-System nach einem der vorhergehenden Ansprüche,
**dadurch gekennzeichnet,**
**dass** es für eine Innenraumüberwachung ausgelegt ist.

13. Ultraschall-Bereichsüberwachungs-System nach einem der vorhergehenden Ansprüche,
**dadurch gekennzeichnet,**
**dass** es für eine Abstandserkennung oder -messung ausgelegt ist.

14. Ultraschall-Bereichsüberwachungs-System nach einem der vorhergehenden Ansprüche,
**dadurch gekennzeichnet,**
**dass** es für eine Einparkhilfe ausgelegt ist.

15. Ultraschall-Bereichsüberwachungs-System nach einem der vorhergehenden Ansprüche,
**dadurch gekennzeichnet,**
**dass** es für eine für eine Sitzplatzbelegungserkennung ausgelegt ist.

16. Ultraschall-Bereichsüberwachungs-System nach einem der vorhergehenden Ansprüche,
**dadurch gekennzeichnet,**
**dass** der Ultraschallsender und der Ultraschallempfänger in einem Transceiver integriert sind.
